(19) **Europäisches Patentamt / European Patent Office / Office européen des brevets**

(11) **EP 0 806 895 B2**

(12) **NOUVEAU FASCICULE DE BREVET EUROPEEN**

Après la procédure d'opposition

(45) Date de publication et mention de la décision concernant l'opposition:
**15.07.2009 Bulletin 2009/29**

(45) Mention de la délivrance du brevet:
**12.04.2000 Bulletin 2000/15**

(21) Numéro de dépôt: **96901858.9**

(22) Date de dépôt: **26.01.1996**

(51) Int Cl.:
*A01N 51/00* (2006.01)   *A01N 47/40* (2006.01)
*A01N 43/40* (2006.01)   *A01N 51/00* (2006.01)
*A01N 47/02* (2006.01)   *A01N 43/56* (2006.01)
*A01N 43/50* (2006.01)   *A01N 43/36* (2006.01)
*A01N 47/40* (2006.01)   *A01N 47/42* (2006.01)
*A01N 43/56* (2006.01)   *A01N 43/50* (2006.01)
*A01N 43/36* (2006.01)   *A01N 43/40* (2006.01)
*A01N 47/02* (2006.01)   *A01N 43/56* (2006.01)
*A01N 43/50* (2006.01)   *A01N 43/36* (2006.01)

(86) Numéro de dépôt international:
**PCT/FR1996/000132**

(87) Numéro de publication internationale:
**WO 1996/023411 (08.08.1996 Gazette 1996/36)**

(54) **ASSOCIATIONS INSECTICIDES COMPRENANT UN INSECTICIDE DE LA FAMILLE DES CHLORONICOTINYLS ET UN INSECTICIDE A GROUPE PYRAZOLE, PYRROLE OU PHENYLIMIDAZOLE**

INSEKTIZIDE KOMBINATIONEN ENTHALTEND EIN INSEKTIZID DER CHLORONIKOTINYL-REIHE UND EIN INSEKTIZID MIT EINE PYRAZOL-, PYRROL ODER PHENYLIMIDAZOL-GRUPPE

INSECTICIDAL COMBINATIONS INCLUDING AN INSECTICIDE FROM THE CHLORONICOTINYL FAMILY AND AN INSECTICIDE HAVING A PYRAZOLE, PYRROLE OR PHENYLIMIDAZOLE GROUP

(84) Etats contractants désignés:
**AT BE CH DE DK ES FR GB GR IE IT LI LU NL PT SE**

(30) Priorité: **30.01.1995 FR 9501300**
**04.05.1995 FR 9505542**

(43) Date de publication de la demande:
**19.11.1997 Bulletin 1997/47**

(73) Titulaire: **Bayer CropScience SA 69009 Lyon (FR)**

(72) Inventeurs:
• **MEUNIER, Lucien Yamoussokro (CI)**

• **CARUHEL, Pascal F-69330 Meyzieu (FR)**
• **MOLLE, Francis F-69100 Villeurbanne (FR)**

(74) Mandataire: **Bentham, Stephen et al J.A. KEMP & CO. 14 South Square Gray's Inn London WC1R 5JJ (GB)**

(56) Documents cités:
**EP-A- 0 295 117    EP-A- 0 512 557**
**EP-A- 0 659 745    JP-A- 4 112 805**
**JP-A- 4 368 303    US-A- 5 726 199**

**Description**

La présente invention concerne de nouvelles associations agrochimiques pour la protection des plantes comprenant au moins une quantité efficace d'un insecticide de la famille des chloronicotinyls A choisi parmi l'imidacloprid et l'acetamiprid et au moins une quantité efficace d'un insecticide B choisi parmi le composé dont le nom commun est fipronil de formule chimique ($\pm$)-5-amino-1-(2,6-dichloro-$\alpha,\alpha,\alpha$-trifluoro-$p$-tolyl)-4-trifluorométhylsulfinylpyrazole-3-carbonitrile, le composé 5-amino-1-(2,6-dichloro-$\alpha,\alpha,\alpha$-trifluoro-$p$-tolyl)-4-éthylsulfinylpyrazole-3-carbonitrile et le composé 5-méthylamino-1-(2,6-dichloro-$\alpha,\alpha,\alpha$-trifluoro-$p$-tolyl)-4-éthylsulfinylpyrazole-3-carbonitrile, ainsi qu'un procédé de traitement des plantes à l'aide de ces associations.

Au sens de la présente invention, on entend par plante une plante entière, une partie de la plante ou le matériel de propagation de la plante, notamment la semence.

Plus avantageusement, l'invention a pour objet une association agrochimique pour la protection des plantes contre les insectes ou les arthropodes, caractérisée en ce qu'une quantité efficace d'un insecticide comprenant un insecticide A, choisi parmi l'imidacloprid et l'acetamiprid, et un insecticide B choisi parmi le composé dont le nom commun est fipronil de formule chimique ($\pm$)-5-amino-1-(2,6-dichloro-$\alpha,\alpha,\alpha$-trifluoro-$p$-tolyl)-4-trifluorométhylsulfinylpyrazole-3-carbonitrile, le composé 5-amino-1-(2,6-dichloro-$\alpha,\alpha,\alpha$-trifluoro-$p$-tolyl)-4-éthylsulfinylpyrazole-3-carbonitrile et le composé 5-méthylamino-1-(2,6-dichloro-$\alpha,\alpha,\alpha$-trifluoro-$p$-tolyl)-4-éthylsulfinylpyrazole-3-carbonitrile, est utilisée.

Outre sa divulgation dans la demande EP 0295117, les propriétés du composé fipronil ont fait l'objet d'une publication dans les comptes rendus de Brighton Crop Protection Conference de 1992 (Pest and Diseases, page 29-34).

L'imidacloprid est le nom commun pour le 1-(6-chloro-3-pyridylméthyl)-N-nitro-imidazolidin-2-ylidèneamine décrit pour ses propriétés insecticides notamment dans les compte rendus "Pests and diseases" Brighton Crop Protection Conference de 1990, p.21.

L'acetamiprid est le nom commun pour le (E)-N[1]-((6-chloro-3-pyridyl)méthyl)-N[2]-cyano-N[1]-méthylacétamidine. Ce produit est répertorié dans le Pesticide Manual (dixième édition) par son numéro de code NI-25. Il a dans un premier temps été divulgué dans la demande internationale PCT/JP90/01282 publiée sous le numéro WO 91/04965. Par la suite, d'autres propriétés de ce composé ont été décrites dans la demande internationale PCT/EP93/01286 publiée sous le numéro WO 93/24004.

De manière préférée les associations selon l'invention sont utilisables pour la protection des semences ou en traitement de sol.

L'invention a encore pour objet des compositions comprenant une association selon l'invention précitée.

L'invention comprend en outre un procédé de traitement des plantes contre les insectes ou les arthropodes, caractérisé en ce que l'on applique une association des deux matières actives. On peut également appliquer une composition contenant les deux matières actives ou, soit simultanément soit successivement de manière à avoir l'effet conjugué, deux compositions contenant chacune l'une des deux matières actives.

L'invention a encore pour objet un procédé de traitement de semences caractérisé en ce que la dite semence est choisie dans le groupe comprenant les céréales (par ex. blé, orge, ou seigle), le maïs, le sorgho, le tournesol, le coton, le riz, le pois, le colza, la pomme de terre, les cultures maraîchères.

Les doses d'emploi des associations de composés selon l'invention peuvent varier dans de larges limites, notamment selon le type de semences et selon la virulence, la nature et le degré de l'attaque par les insectes ou les arthropodes et les conditions climatiques. L'insecticide (B), de préférence le fipronil, est utilisé à une dose allant de 10 à 500, de préférence 40 à 300, g par quintal (g/q) et l'insecticide A est utilisé à une dose allant de 10 à 800, de préférence 20 à 500, g par quintal de semences, le ratio B/A est alors compris entre 0,0125 et 50, de préférence entre 0,08 et 15, le ratio A/B est compris entre 0.02 et 80, de préférence entre 0,067 et 12,5.

Dans le cas d'un traitement de semences de maïs ou de sorgho, les doses utilisées seront de 20 à 500 g/q pour l'insecticide A, et de 40 à 300 g/q pour l'insecticide B (de préférence le Fipronil).

Un autre objet de la présente invention concerne un procédé de traitement de semences de betterave avec les associations ou compositions précitées.

Dans le cas d'un traitement de semences de betterave, les doses utilisées seront de 20 à 100 g/unité pour l'insecticide A, et de 25 à 50 g/unité pour l'insecticide B (de préférence le Fipronil). L'unité est une quantité de graines qu'il faut pour ensemencer un hectare.

Selon une variante, l'invention a également pour objet un procédé de traitement de sol par application notamment dans la raie de semis :

- soit d'un granulé contenant les deux matières actives, en association ou composition,
- soit d'un mélange de deux granulés contenant chacun une des deux matière active, avec éventuellement un ou plusieurs supports solides ou liquides acceptables en agriculture et/ou un ou plusieurs agents tensioactifs acceptables en agriculture.

Ce procédé est avantageusement mis en oeuvre dans des semis de céréales, maïs, coton, tournesol. Pour les céréales et le maïs, les doses d'un insecticide A sont comprises entre 50 et 500 g/ha (gramme par hectare) et celles de l'insecticide B (de préférence le Fipronil) entre 50 et 200 g/ha.

Les procédés selon l'invention sont particulièrement utiles pour la destruction d'insectes ou d'arthropodes nuisibles.

Parmi ces derniers, les divers variétés de mouches, telles que la mouche grise (Phorbia coarctata) ou la mouche des semis (Phorbia platura), les atomaires, les blaniules, les scutigerelles, les cicadelles, les pucerons, ainsi que les taupins (Agriotes sp., Athous haemorrhoïdalis) sont détruits par la mise en oeuvre d'une association, d'une composition, d'un traitement selon l'invention.

L'invention concerne également le produit de multiplication des plantes, et notamment la semence, revêtu de et/ou contenant une association telle que définie plus haut ou une composition contenant le mélange de deux matières actives ou un mélange de deux compositions apportant chacune une des deux matières actives. On comprend aisément que la semence notamment peut être soit traitée avec une composition comprenant l'insecticide B, de préférence le fipronil, puis avec une composition comprenant l'insecticide A choisi parmi l'imidacloprid et l'acetamiprid, ou inversement, soit avec une composition contenant les deux matières actives.

Le terme revêtu de et/ou contenant signifie généralement que la matière active se trouve majoritairement à la surface du produit de multiplication lors de l'application encore qu'une partie plus ou moins significative puisse y pénétrer selon le mode d'application. Quand ledit produit de multiplication est replanté, il absorbe la matière active. En fait, commercialement on peut avancer que la matière active est en majorité à la surface la plupart du temps.

L'invention concerne aussi un produit comprenant un insecticide A, et un insecticide B, de préférence le Fipronil, pour une application simultanée, successive ou séquentielle dans la protection des plantes contre les insectes ou les arthropodes.

Les exemples suivants sont donnés pour illustrer les associations, compositions et traitement selon l'invention. Bien entendu ces exemples ne sont pas limitatifs et bien d'autres plantes peuvent être traitées et insectes ou arthropodes contrôlés par les associations et compositions selon l'invention.

Exemple 1.

Des graines de maïs ont été traitées selon un traitement de semences classique :

- d'une part par une suspension concentrée FS de Fipronil à 500 g ma/l (0,125 l/q).
- d'autre part par une poudre mouillable pour traitement de semences WS d'imidacloprid (Gaucho WS) à 700 g ma/kg (0,35 ou 0,7 kg de cette formulation sont utilisés par quintal de semences).
- enfin une partie est traitée par 0,125 l/q de fipronil et 0,35 kg/q d'imidacloprid.

Une partie non traitée de semences sert d'échantillon témoin. Par ailleurs, une comparaison est également faite par rapport au Carbofuran, appliqué sous forme de microgranulés, localisé dans la raie de semis. Les semences de maïs ainsi traitées, ou les semences témoin, sont plantées sur un sol vierge tandis qu'une partie non traitée est plantée sur une parcelle où sont présents les granulés de carbofuran. 49 jours après semis on évalue le pourcentage de plantes attaquées par le ver fil de fer (Agriotes sp.). Les résultats sont les suivants :

| Traitement | % (plantes attaquées) |
|---|---|
| Témoin non traité | 90 |
| Fipronil 62,5 g ma/q | 18,3 |
| Fipronil 62,5 g/q + Imidacloprid 245 g/q | 3,1 |
| Imidacloprid 245 g ma/q | 20 |
| Imidacloprid 490 g ma/q | 5 |
| Carbofuran 600 g ma/ha | 10 |

Cet exemple illustre également bien la supériorité des associations, compositions et procédés selon l'invention tant par rapport aux insecticides seuls que par rapport à un produit commercial de référence.

Par ailleurs aucun phénomène de phytotoxicité n'est observé dans cet exemple.

Exemple 2 : Essai sur orge (Rhopalosiphum padi).Imidacloprid + fipronil.

Des semences d'orge sont traitées de la façon suivante :

a) une partie par 50 g/q de fipronil,

b) une partie par 35 g/q d'imidacloprid,

c) une partie par 50 g/q de fipronil + 35 g/q d'imidacloprid,

d) enfin, une dernière quantité de semences n'est pas traitée et sert de témoin.

160 jours après avoir semé les graines d'orge, une analyse du pourcentage de décoloration liée à l'infection par le virus de la jaunisse nanisante de l'orge transmis par *Rhopalosiphum padi* montre que l'on a 6,3% de décoloration dans le cas c) contre 67,8 et 19,5% dans les cas a) et b) respectivement. Les plants témoins d) sont décolorés à plus de 80% (81,3%). On constate que les deux insecticides pris seuls permettent de réduire la décoloration, mais que cette réduction est nettement plus prononcée quand les deux produits sont associés.

Exemple 3 : Essai sur *Plutella xylostella.*Acetamiprid + fipronil.

Un essai réalisé sur teigne des crucifères (Diamondback moth, *Plutella xylostella)* a montré que l'ajout d'une quantité inefficace de NI25 (Acetamiprid) au firpronil permettait de réduire la dose de ce dernier d'un facteur 2,5 (ratio de synergie) pour obtenir la même activité.

Le test est réalisé de la façon suivante : des larves de *Plutella xylostella* à un stade intermédiaire de leur developpement (3ième stade larvaire) sont placées sur des feuilles de choux servant de support biologique. On traite alors des feuilles différentes avec des concentrations de matière active variables et 48 h après le traitement un comptage de larves mortes est fait. A partir de la courbe mortalité en fonction de la concentration de matière active, on détermine la CL50 (concentration détruisant 50% de la population). La concentration létale 50 est obtenue avec 0,4 ppm de fipronil seul. La CL50 du NI25 est de 40 ppm. Quand on utilise un mélange fipronil (2 doses)+NI25 (1 dose), la CL50 passe alors à 0,16 ppm (dose exprimée en concentration de fipronil).

Exemple 4 : Essai sur aubergine *(Myzus* persicae).Acetamiprid + fipronil.

Un certain nombre de plants d'aubergine sont infestés par le puceron vert du pêcher *(Myzus persicae)*. Certains plants non traités servent de témoin et permettent de calculer le pourcentage d'activité obtenu sur des plants préalablement traités soit par le fipronil seul à diverses doses soit par l'acetamiprid seul soit enfin par le mélange extemporané (tank mix). La lecture du pourcentage de mortalité de l'insecte est faite 3 jours après le traitement foliaire des plants d'aubergine et conduisent aux résultats consignés dans le tableau suivant :

| fipronil \ NI25 | 0 g/ha | 6,25 g/ha | Résultat attendu E ** | Synergie |
|---|---|---|---|---|
| 0 g/ha | 0%* | 2% | - | - |
| 3,13 g/ha | 0% | 6% | 2% | +4% |
| 12,5 g/ha | 0% | 47% | 2% | +45% |
| 50 g/ha | 23% | 72% | 20,4% | +51,6% |

\* Témoin non traité.

\*\* selon calcul fait par la formule de Colby bien connu des practiciens:

dans laquelle:

$$E = X + Y - X.Y/100$$

- E est le pourcentage attendu de mortalité de l'insecte pour un mélange des deux insecticides A et B à des doses définies, respectivement égales à a et b, X est le pourcentage de mortalité observé pour l'insecticide A à la dose a, Y est le pourcentage de mortalité observé pour l'insecticide B à la dose b.

Quand le pourcentage de mortalité obtenu du mélange est supérieur à E, il y a synergie.

Pour leur emploi dans la pratique, les associations selon l'invention sont rarement utilisées seules et peuvent être utilisées dans des compositions contenant l'une ou l'autre des matières actives ou encore les deux ensemble. Dans chaque composition, les matières actives sont habituellement associées à un support, solide ou liquide, utilisable en agriculture et éventuellement au moins un agent tensioactif.

Ces compositions, utilisables pour la protection des végétaux contre les insectes, contiennent comme matière active au moins un des constituants de l'association selon l'invention tel que décrit précédemment en combinaison avec les supports solides ou liquides, acceptables en agriculture et/ou les agents tensioactifs également acceptables en agriculture. En particulier sont utilisables les supports inertes et usuels et les agents tensioactifs usuels.

Ces compositions contiennent habituellement entre 0,5 et 95% de composé selon l'invention, c'est à dire soit l'association soit une des deux matières actives. Dans cette description, sauf indication contraire, les pourcentages sont exprimés en poids.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est généralement indispensable lorsque la matière active et/ou le support inerte ne sont pas solubles dans l'eau et que l'agent vecteur de l'application est l'eau.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... ainsi que d'autres matières actives connues à propriétés pesticides (notamment insecticides ou fongicides) ou à propriétés favorisant la croissance des plantes (notamment des engrais) ou à propriétés régulatrices de la croissance des plantes. Plus généralement les composés selon l'invention peuvent être associés à tous les additifs solides ou liquides correspondant aux techniques habituelles de la mise en formulation.

Pour leur application, les constituants de l'association se trouvent donc souvent sous forme de compositions, qui sont elles-mêmes sous des formes assez diverses, solides ou liquides.

Comme formes de compositions solides, on peut citer les poudres pour poudrage ou dispersion (à teneur en association selon l'invention pouvant aller jusqu'à 100 %) et les granulés, notamment ceux obtenus par extrusion, par compactage, par imprégnation d'un support granulé, par granulation à partir d'une poudre (la teneur en association selon l'invention dans ces granulés étant entre 0,5 % et 80 % pour ces derniers cas).

Selon un exemple de composition de granulés, on utilise les constituants suivants :

Exemple G

- association ou une des deux matière active     50 g
- épichlorhydrine     2,5 g
- éther de cétyle et de polyglycol     2,5 g
- polyéthylène glycol     35 g
- kaolin (granulométrie : 0,3 à 0,8 mm)     910 g

Dans ce cas particulier on mélange les matières actives avec l'épichlorhydrine et on dissout avec 60 g d'acétone, on ajoute alors le polyéthylène glycol et l'éther de cétyle et de polyglycol. On arrose le kaolin avec la solution obtenue et on évapore ensuite l'acétone sous vide.

Les composés ou associations des dits composés peuvent encore être utilisés sous forme de poudre pour poudrage. On peut aussi utiliser une composition comprenant 50 g de matière(s) active(s) et 950 g de talc ou on peut aussi utiliser une composition comprenant 20 g de matière(s) active(s), 10 g de silice finement divisée et 970 g de talc. On mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensioactifs, les agents de pénétration, les inhibiteurs de corrosion, les colorants ou les adhésifs précédemment cités.

Les suspensions concentrées, également applicables en pulvérisation, sont préparées de manière à obtenir un produit fluide stable ne se déposant pas et elles contiennent habituellement de 2 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble. Certaines matières solides organiques ou des sels minéraux peuvent être dissous dans le support pour aider à empêcher la sédimentation ou comme antigels pour l'eau.

Un exemple d'une telle formulation est donné ci-dessous :

Exemple SC :

- matière active 600 g
- phosphate de tristyrylphénol polyéthoxylé 50 g
- alkylphénol polyéthoxylé 50 g
- polycarboxylate de sodium 20 g
- éthylène glycol 50 g
- huile organopolysiloxanique (antimousse) 1 g
- polysaccharide 1,5 g
- eau qsp 11

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des agents de pénétration, des adhésifs, ou des agents antimottants, colorants, etc...

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses. On peut les mettre en suspension avec de l'eau à toute concentration désirée.

A la place des poudres mouillables, on peut réaliser des pâtes. Les conditions et modalités de réalisation et d'utilisation de ces pâtes sont semblables à celles des poudres mouillables ou poudres à pulvériser.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

**Revendications**

1. Association agrochimique pour la protection des plantes contre les insectes ou les arthropodes, **caractérisée en ce qu'**une quantité efficace d'un insecticide comprenant un insecticide de la famille des chloronicotinyls A choisi parmi l'imidacloprid et l'acetamiprid, et un insecticide B choisi parmi le Fipronil de formule chimique ($\pm$)-5-amino-1-(2,6-dichloro-$\alpha,\alpha,\alpha$-trifluoro-$p$-tolyl)-4-trifluorométhylsulfinylpyrazole-3-carbonitrile; le composé 5-amino-1-(2,6-dichloro-$\alpha,\alpha,\alpha$-trifluoro-$p$-tolyl)-4-éthylsulfinylpyrazole-3-carbonitrile et le composé 5-méthylamino-1-(2,6-dichloro-$\alpha,\alpha,\alpha$-trifluoro-$p$-tolyl)-4-éthylsulfinylpyrazole-3-carbonitrile est utilisée.

2. Association selon la revendication 1 pour la protection des semences.

3. Association selon la revendication. 1 pour le traitement de sol.

4. Compositions **caractérisées en ce qu'**elles comprennent entre 0,5% et 95% d'une association selon la revendication 1, un ou plusieurs supports solides ou liquides acceptable en agriculture et/ou un ou plusieurs agents tensioactifs acceptables en agriculture.

5. Compositions **caractérisées en ce qu'**elles comprennent entre 0,5% et 95% d'une association selon la revendication 2, un ou plusieurs supports solides ou liquides acceptables en agriculture et/ou un ou plusieurs agents tensioactifs acceptables en agriculture.

6.  Compositions **caractérisées en ce qu'**elles comprennent entre 0,5% et 95% d'une association selon la revendication 3, un ou plusieurs supports solides ou liquides acceptables en agriculture et/ou un ou plusieurs agents tensioactifs acceptables en agriculture.

7.  Procédé de traitement des plantes contre les insectes ou les arthropodes, **caractérisé en ce que** l'on applique une association selon l'une des revendications 1 et 2 où une composition selon l'une des revendications 4 et 5 ou, soit simultanément soit successivement de manière à avoir l'effet conjugué, deux compositions contenant chacune l'une des deux matières actives.

8.  Procédé de traitement de la semence selon la revendication 7 **caractérisé en ce que** la semence est choisie dans le groupe comprenant les céréales (par ex. blé, orge, ou seigle), le maïs, le sorgho, le tournesol, le coton, le riz, le pois, le colza, la pomme de terre, les cultures maraîchère.

9.  Procédé selon la revendication 8 **caractérisé en ce que** l'insecticide (B), de préférence le fipronil, est utilisé à une dose allant de 10 à 500g par quintal de semences (g/q) et l'insecticide A, est utilisé a une dose allant de 10 à 800 g/q.

10. Procédé selon la revendication 9 **caractérisé en ce que** pour le maïs et le sorgho les doses utilisées vont de 20 à 500 g/q pour insecticide A, et de 40 à 300 g/q pour l'insecticide B, de préférence le Fipronil,

11. Procédé de traitement de semence de betterave selon la revendication 7.

12. Procédé selon la revendication 11 **caractérisé en ce que** les doses utilisées vont de 20 à 100 g/unité pour l'insecticide A et de 25 à 50 g/unité pour l'insecticide B, de préférence le Fipronil.

13. Procédé de traitement de sol par application, notamment dans la raie de semis, d'un granulé contenant une association selon la revendication 3 ou d'une composition selon la revendication 6 ou d'un mélange de deux granulés contenant chacun une des deux matière active, avec éventuellement un ou plusieurs supports solides ou liquides acceptables en agriculture et/ou un ou plusieurs agents tensioactifs acceptables en agriculture.

14. Procédé selon la revendication 13 **caractérisé en ce que** la dose d'un insecticide de la famille des chloronicotinyls A est comprise entre 50 et 500 g/ha et celle d'insecticide B, de préférence le Fipronil, entre 50 et 200 g/ha dans le cas du traitement d'un sol destiné au maïs ou aux céréales.

15. Procédé selon l'une des revendications 7 à 14 particulièrement utile pour la destruction d'insectes ou d'arthropodes nuisibles choisi dans le groupe comprenant la mouche grise, la mouche des semis, les atomaires, les blaniules, les scutigerelles, les cicadelles, les pucerons, les tapins.

16. Produit de multiplication des plantes, et notamment la semence, revêtu de et/ou contenant une association selon l'une des revendications 1 et 2 ou une composition selon l'une des revendications 4 et 5 ou un mélange de deux compositions apportant chacune une des deux matières actives.

17. Un produit comprenant un insecticide de la famille des chloronicotinyls A, choisi parmi l'imidacloprid et l'acetamiprid et un insecticide B choisi parmi le fipronil de formule chimique ($\pm$)-5-amino-1-(2,6-dichloro-(2,6,dichloro-$\alpha,\alpha,\alpha$-trifluoro-$p$-tolyl)-4-trifluorométhylsulfinylpyrazole-3-carbonitrile, le composé 5-amino-1-(2,6-dichloro-$\alpha,\alpha,\alpha$-trifluoro-$p$-tolyl)-4-éthylsulfinylpyrazole-3-carbonitrile et le composé 5-méthylamino-1-(2,6-dichloro-$\alpha,\alpha,$-trifluoro-$p$-tolyl)-4-éthylsulfinylpyrazole-3-carbonitrile pour une application simultanée, successive ou séquentielle dans la protection des plantes contre les insectes ou les arthropode.

18. Produit selon la revendication 17 **caractérisé en ce que** l'insecticide B est le Fipronil.

**Claims**

1.  Agrochemical combination for the protection of plants against insects or arthropods, **characterized in that** an effective quantity of an insecticide comprising an insecticide A from the class of the chloronicotinyls selected from imidacloprid and acetamiprid and an insecticide B selected from fipronil, of chemical formula ($\pm$)-5-amino-1-(2,6-

dichloro-$\alpha,\alpha,\alpha$-trifluoro-$p$-tolyl)-4-trifluoromethylsulphinylpyrazole-3-carbonitrile, the compound 5-amino-1-(2,6-dichloro-$\alpha,\alpha,\alpha$-trifluoro-$p$-tolyl)-4-ethylsulphinylpyrazole-3-carbonitrile and the compound 5-methylamino-1-(2,6-dichloro-$\alpha,\alpha,\alpha$-trifluoro-$p$-tolyl)-4-ethylsulphinylpyrazole-3-carbonitrile is used.

2. Combination according to Claim 1 for the protection of seeds.

3. Combination according to Claim 1 for the treatment of soil.

4. Compositions **characterized in that** they comprise between 0.5% and 95% of a combination according to Claim 1, one or more agriculturally acceptable solid or liquid carriers and/or one or more agriculturally acceptable surfactants.

5. Compositions **characterized in that** they comprise between 0.5% and 95% of a combination according to Claim 2, one or more agriculturally acceptable solid or liquid carriers and/or one or more agriculturally acceptable surfactants.

6. Compositions **characterized in that** they contain between 0.5% and 95% of a combination according to Claim 3, one or more agriculturally acceptable solid or liquid carriers and/or one or more agriculturally acceptable surfactants.

7. Method for the anti-insect or anti-arthropod treatment of plants, **characterized in that** a combination according to either of Claims 1 and 2 or a composition according to either of Claims 4 and 5 or, either simultaneously or in succession so as to have the combined effect, two compositions each containing one of the two active ingredients is or are applied.

8. Method of treating seed according to Claim 7, **characterized in that** the seed is chosen from the group consisting of cereals (for example wheat, barley or rye), maize, sorghum, sunflower, cotton, rice, pea, colza, potato and market-garden crops.

9. Method according to Claim 8, **characterized in that** the insecticide (B), preferably fipronil, is used at a rate ranging from 10 to 500 g per quintal of seed (g/q) and the insecticide A, preferably imidacloprid, acetamiprid or nitenpyram, is used at a rate ranging from 10 to 800 g/q.

10. Method according to Claim 9, **characterized in that** for maize and sorghum the rates used range from 20 to 500 g/q for the insecticide A, preferably imidacloprid, acetamiprid or nitenpyram, and from 40 to 300 g/q for the insecticide B, preferably Fipronil.

11. Method of treating beet seed according to Claim 7.

12. Method according to Claim 11, **characterized in that** the rates used range from 20 to 100 g/unit for the insecticide A, and from 25 to 50 g/unit for the insecticide B, preferably Fipronil.

13. Method of treating soil by the application, in particular into the seed drill, of a granular formulation containing a combination according to Claim 3 or of a composition according to Claim 6 or of a mixture of two granular formulations, each containing one of the two active ingredients, with optionally one or more solid or liquid, agriculturally acceptable carriers and/or one or more agriculturally acceptable surfactants.

14. Method according to Claim 13, **characterized in that** the rate of an insecticide from the class of the chloronicotinyls, such as imidacloprid, acetamiprid or nitenpyram, is between 50 and 500 g/ha and that of insecticide B, preferably Fipronil, is between 50 and 200 g/ha in the case of the treatment of a soil intended for maize or for cereals.

15. Method according to one of Claims 7 to 14, which is particularly useful for the destruction of insect or arthropod pests chosen from the group consisting of wheat bulb fly, seedcorn maggot, Atomaria, millipedes, centipedes, Cicadellidae, aphids and click beetles.

16. Product of propagation of the plants, especially the seed, coated with and/or containing a combination according to either of Claims 1 and 2 or a composition according to either of Claims 4 and 5 or a mixture of two compositions each providing one of the two active ingredients.

**17.** A product comprising an insecticide A from the class of the chloronicotinyls, selected from imidacloprid, acetamiprid and nitenpyram, and an insecticide B selected from fipronil, of chemical formula $(\pm)$-5-amino-1-(2,6-dichloro-$\alpha,\alpha$,$\alpha$-trifluoro-$p$-tolyl)-4-trifluoromethylsulphinylpyrazole-3-carbonitrile, the compound 5-amino-1-(2,6-dichloro-$\alpha,\alpha,\alpha$-trifluoro-$p$-tolyl)-4-ethylsulphinylpyrazole-3-carbonitrile and the compound 5-methylamino-1-(2,6-dichloro-$\alpha,\alpha,\alpha$-trifluoro-$p$-tolyl)-4-ethylsulphinylpyrazole-3-carbonitrile, for a simultaneous, successive or sequential application in the protection of plants against insects or arthropods.

**18.** Product according to Claim 17, **characterized in that** the insecticide B is Fipronil.

## Patentansprüche

**1.** Agrochemische Kombination für den Schutz von Pflanzen vor Insekten oder Arthropoden, **dadurch gekennzeichnet, dass** eine wirksame Menge eines Insektizids verwendet wird, das ein Insektizid A aus der Familie der Chlornicotinyle, das unter Imidacloprid und Acetamiprid ausgewählt ist, und ein Insektizid B enthält, das unter Fipronil mit der chemischen Formel $(\pm)$-5-Amino-1-(2,6-dichlor-$\alpha,\alpha,\alpha$-trifluor-$p$-tolyl)-4-trifluormethylsulfinylpyrazol-3-carbonitril, der Verbindung 5-Amino-1-(2,6-dichlor-$\alpha,\alpha,\alpha$-trifluor-$p$-tolyl)-4-ethylsulfinylpyrazol-3-carbonitril oder der Verbindung 5-Methylamino-1-(2,6-dichlor-$\alpha,\alpha,\alpha$-trifluor-$p$-tolyl)-4-ethylsulfinylpyrazol-3-carbonitril ausgewählt ist.

**2.** Kombination nach Anspruch 1 für den Schutz von Saatgut.

**3.** Kombination nach Anspruch 1 für die Bodenbehandlung.

**4.** Zusammensetzungen, **dadurch gekennzeichnet, dass** sie 0,5 bis 95 % einer Kombination nach Anspruch 1, einen oder mehrere in der Landwirtschaft akzeptable feste oder flüssige Träger und/oder einen oder mehrere in der Landwirtschaft akzeptable grenzflächenaktive Stoffe enthalten.

**5.** Zusammensetzungen, **dadurch gekennzeichnet, dass** sie 0,5 bis 95 % einer Kombination nach Anspruch 2, einen oder mehrere in der Landwirtschaft akzeptable feste oder flüssige Träger und/oder einen oder mehrere in der Landwirtschaft akzeptable grenzflächenaktive Stoffe enthalten.

**6.** Zusammensetzungen, **dadurch gekennzeichnet, dass** sie 0,5 bis 95 % einer Kombination nach Anspruch 3, einen oder mehrere in der Landwirtschaft akzeptable feste oder flüssige Träger und/ oder einen oder mehrere in der Landwirtschaft akzeptable grenzflächenaktive Stoffe enthalten.

**7.** Verfahren zur Behandlung von Pflanzen gegen Insekten oder Arthropoden, **dadurch gekennzeichnet, dass** eine Kombination nach einem der Ansprüche 1 und 2 oder eine Zusammensetzung nach einem der Ansprüche 4 und 5 ausgebracht wird, oder dass zwei Zusammensetzungen, von denen die eine den einen Wirkstoff und die andere den anderen Wirkstoff enthält, gleichzeitig oder nacheinander so ausgebracht werden, dass der gemeinschaftliche Effekt erzielt wird.

**8.** Verfahren nach Anspruch 7 zur Behandlung von Saatgut, **dadurch gekennzeichnet, dass** das Saatgut unter dem Saatgut von Getreide (z.B. Weizen, Gerste oder Roggen), Mais, Sorghum, Sonnenblumen, Baumwolle, Reis, Erbsen, Raps, Kartoffeln, Gemüsekulturen ausgewählt wird.

**9.** Verfahren nach Anspruch 8, **dadurch gekennzeichnet, dass** das Insektizid B, vorzugsweise Fipronil, in einer Dosis verwendet wird, die im Bereich von 10 bis 500 g pro Doppelzentner Saatgut (g/dz) liegt, und dass das Insektizid A in einer Dosis von 10 bis 800 g/dz verwendet wird.

**10.** Verfahren nach Anspruch 9, **dadurch gekennzeichnet, dass** die für Mais und Sorghum verwendete Dosis an Insektizid A 20 bis 500 g/dz und an Insektizid B, vorzugsweise Fipronil, 40 bis 300 g/dz beträgt.

**11.** Verfahren nach Anspruch 7 zur Behandlung des Saatguts von Roter Beete.

**12.** Verfahren nach Anspruch 11, **dadurch gekennzeichnet, dass** die verwendete Dosis an Insektizid A 20 bis 100 g/ Einheit und an Insektizid B, vorzugsweise Fipronil, 25 bis 50 g/Einheit beträgt.

**13.** Verfahren zur Behandlung des Bodens durch Ausbringen, insbesondere in den die Aussaat enthaltenden Streifen, eines Granulats, das eine Kombination nach Anspruch 3 enthält, oder einer Zusammensetzung nach Anspruch 6 oder eines Gemisches von zwei Granulaten, von denen das eine Granulat den einen Wirkstoff und das andere Granulat den anderen Wirkstoff enthält, gegebenenfalls mit einem oder mehreren in der Landwirtschaft akzeptablen festen oder flüssigen Trägern und/oder einem oder mehreren in der Landwirtschaft akzeptablen grenzflächenaktiven Stoffen.

14. Verfahren nach Anspruch 13, **dadurch gekennzeichnet, dass** bei der Behandlung eines Erdbodens, der für Mais oder Getreide vorgesehen ist, die Dosis des Insektizids aus der Familie der Chlornicotinyle 50 bis 500 g/ha beträgt, und dass die Dosis des Insektizids B, vorzugsweise Fipronil, 50 bis 200 g/ha beträgt.

15. Verfahren nach einem der Ansprüche 7 bis 14, das besonders für die Vernichtung von Schadinsekten oder schädlichen Arthropoden brauchbar ist, die unter der Minierfliege oder Brachfliege, der Bohnenfliege, Moosknopfkäfern, Tausendfüßlern, Asseln oder Zwergfüßlern, Zikaden, Blattläusen, Schnellkäfern ausgewählt werden.

16. Vermehrungsmaterial von Pflanzen, insbesondere Saatgut, das mit einer Kombination nach einem der Ansprüche 1 und 2 oder einer Zusammensetzung nach einem der Ansprüche 4 und 5 oder einem Gemisch aus zwei Zusammensetzungen, von denen die eine Zusammensetzung den einen Wirkstoff und die andere Zusammensetzung den anderen Wirkstoff enthält, überzogen ist und/oder eine solche Kombination oder Zusammensetzung oder ein solches Gemisch aus Zusammensetzungen enthält.

17. Produkt, das ein Insektizid A aus der Familie der Chlornicotinyle, das unter Imidacloprid und Acetamiprid ausgewählt ist, und ein Insektizid B enthält, das unter Fipronil mit der chemischen Formel ($\pm$)-5-Amino-1-(2,6-dichlor-$\alpha,\alpha,\alpha$-trifluor-$p$-tolyl)-4-trifluormethylsulfinylpyrazol-3-carbonitril, der Verbindung 5-Amino-1-(2,6-dichlor-$\alpha,\alpha,\alpha$-trifluor-$p$-tolyl)-4-ethylsulfinylpyrazol-3-carbonitril oder der Verbindung 5-Methylamino-1-(2,6-dichlor-$\alpha,\alpha,\alpha$-trifluor-$p$-tolyl)-4-ethylsulfinylpyrazol-3-carbonitril ausgewählt ist, für die gleichzeitige, aufeinander folgende oder sequentielle Anwendung beim Schutz von Pflanzen vor Insekten oder Arthropoden.

18. Produkt nach Anspruch 17, **dadurch gekennzeichnet, dass** es sich bei dem Insektizid B um Fipronil handelt.

## RÉFÉRENCES CITÉES DANS LA DESCRIPTION

**Documents brevets cités dans la description**

- EP 0295117 A
- JP 2001282 W
- WO 9104965 A
- EP 9301286 W
- WO 9324004 A

**Littérature non-brevet citée dans la description**

- *Pest and Diseases,* 29-34